# EUROPÄISCHE PATENTSCHRIFT

(11) **EP 0 498 519 B1**
(45) Veröffentlichungstag und Bekanntmachung des Hinweises auf die Patenterteilung: **26.07.1995**
(21) Anmeldenummer: 92250027.7
(22) Anmeldetag: 10.02.1992
(51) Int. Cl.: B01D 53/00, C12S 5/00

(54) **Verfahren zum Reinigen von Gasen**
Process for the purification of gases
Procédé pour la purification de gaz

(30) Priorität: 08.02.1991 DE 4104372
(43) Veröffentlichungstag der Anmeldung: 12.08.1992
(73) Patentinhaber: HERBST UMWELTTECHNIK GmbH, D-12207 Berlin (DE)
(72) Erfinder: Fechter, Leonhard, Dr., W-1000 Berlin 31 (DE)
(74) Vertreter: Pfenning, Meinig & Partner

(56) Entgegenhaltungen:
- EP-A- 0 100 024
- EP-A- 0 224 889
- DE-C- 3 912 418

## Beschreibung

Die Erfindung betrifft ein Verfahren zum Reinigen von Gasen nach dem Oberbegriff des Anspruchs 1.

Vorrichtungen zum Reinigen von mit Schadstoffen beladenen Gasen mittels Biofiltern sind allgemein bekannt. Nach dem gegenwärtigen Stand der Technik wird das zu reinigende mit Schadstoff beladene Gas in einem Vorwäscher bzw. in einem Befeuchter vorgereinigt und bis zu 100 % mit Feuchtigkeit gesättigt. Anschließend wird es in einen Biofilter geleitet, der ein- oder mehrstufig aufgebaut sein kann. Die Strömungsrichtung des beladenen Gases geht entweder von unten nach oben oder von oben nach unten. In dem Biofilter befindet sich üblicherweise eine Schüttung aus Trägermaterial, das beispielsweise ein organisches Material ist. Dabei werden Torf-Heidekrautgemische oder Rindenschnipsel, Holzschnipsel, Kompost oder auch andere Gemische aus Torf/Kunststoff, Kompost/Kunststoff oder ähnlichem verwendet. Damit der Biofilter nicht austrocknet, besitzen viele Biofilter eine Befeuchtungsanlage, bei der über ein Rohr- und Düsensystem Wasser auf die Schüttung aufgebracht wird.

Die in den Biofilter mit dem Trägergas eingeleiteten Schadstoffe gelangen in die biologisch aktive Biofilterschüttung, wobei deren gesamte Oberfläche mit einem feuchten Biofilm überzogen ist, der in der Lage ist, die Schadstoffe aufzunehmen. Die Schadstoffmoleküle werden innerhalb des Biofilms entweder zuerst im Wasser gelöst oder an der Zellwand angelagert. Danach wandern die Schadstoffmoleküle durch die Zellmembrane in das jeweilige Bakterium. Innerhalb des Bakteriums vollzieht sich die Stoffumwandlung, bei der H₂O, CO₂ und Zellsubstanz produziert wird. Der beschriebene Vorgang wird unter anderem durch spezielle biospezifische Eigenschaften verstärkt. Zur Erhöhung der spezifischen Abbauleistung der Biofilter ist weiterhin bekannt, den Mikroorganismen Nährstoffe zuzuführen. Hierdurch werden jedoch auch unerwünschte Mikroorganismen gefördert, wodurch für die Reinigung besonders wirksame Mikroorganismen in ihrem Wachstum behindert oder sogar unterdrückt werden, so daß die Schadstoffabbauleistung nicht in gewünschter Weise gesteigert werden kann. Doch selbst wenn die Nährstoffe speziell das Wachstum der wirksamen Mikroorganismen fördern, kann dieses in so unkontrollierbarer Weise erfolgen, daß die vom Trägermaterial gebildeten Zwischenräume vollständig zuwachsen, wodurch die Abbauleistung erheblich beeinträchtigt wird.

Es ist daher die Aufgabe der vorliegenden Erfindung, ein Verfahren zum Reinigen von Gasen zu schaffen, bei denen ein selektives und kontrolliertes Wachstum der Mikroorganismen möglich ist, so daß eine optimale Abbauleistung und damit eine optimale Reinigung der Gase erzielt werden kann.

Diese Aufgabe wird erfindungsgemäß durch die kennzeichnenden Merkmale des Anspruchs 1 in Verbindung mit den Merkmalen des Oberbegriffs gelöst. Vorteilhafte Weiterbildungen des erfindungsgemäßen Verfahrens ergeben sich aus den jeweiligen Unteransprüchen.

Dadurch, daß dem Biofilter sowohl Nährstoffe als auch gezielt Giftstoffe für die Mikroorganismen zugeleitet werden, können selektiv einzelne Mikroorganismen gefördert und gleichzeitig andere Mikroorganismen geschwächt werden. Hierdurch kann eine gewünschte Zusammensetzung der Populationen der Mikroorganismen für eine beliebig lange Zeit erhalten werden. Jedoch ist nicht nur die Zusammensetzung der Mikroorganismen kontrollierbar, sondern es kann auch das Wachstum insgesamt gesteuert werden, so daß ein Zuwachsen des Biofilters nicht zu befürchten ist. Ändern sich die Menge und Beschaffenheit der in den Gasen enthaltenen Verunreinigungen, dann können durch eine entsprechende Änderung der Menge und Beschaffenheit der Nährstoffe und/oder Giftstoffe die Mikroorganismen in ihrer Zusammensetzung und in ihrer Menge so eingestellt werden, daß stets eine optimale Reinigungswirkung erzielt wird.

Es besteht die Möglichkeit, solche Giftstoffe einzusetzen, die nur bestimmte unerwünschte Mikroorganismen schwächen, die anderen Mikroorganismen dagegen nicht beeinflussen. Andere Giftstoffe können die Eigenschaft haben, sämtliche im Biofilter vorhandenen Mikroorganismen zu schwächen, wobei diese Schwächung unterschiedlich intensiv ist, so daß sowohl die Zusammensetzung der Mikroorganismen als auch ihr Wachstum insgesamt gesteuert werden können. Als Giftstoffe lassen sich beispielsweise Schwermetallsalze, Kaliumsorbat, Dicyandiamid oder auch Wasserstoffperoxid, das sämtliche Mikroorganismen schwächt, verwenden.

Darüber hinaus kann eine selektive Beeinflussung des Wachstums der Mikroorganismen auch über den pH-Wert erfolgen. Die für das Wachstum optimalen pH-Werte sind für die einzelnen Mikroorganismen unterschiedlich, so daß durch Einstellung eines bestimmten pH-Wertes sich erwünschte Mikroorganismen schneller vermehren als unerwünschte Mikroorganismen. In gleicher Weise kann über den Feuchtigkeitsgehalt, die Temperatur und/oder den Sauerstoffgehalt des Biofilters das Wachstum der Mikroorganismen selektiv beeinflußt werden.

Durch geeignete Mischung verschiedener Nähr- und Giftstoffe sowie eine zweckmäßige Einstellung der Verfahrensparameter können daher in jedem Einzelfall die gewünschte Zusammensetzung und das Gesamtwachstum der im Biofilter vorhandenen Mikroorganismen erhalten werden.

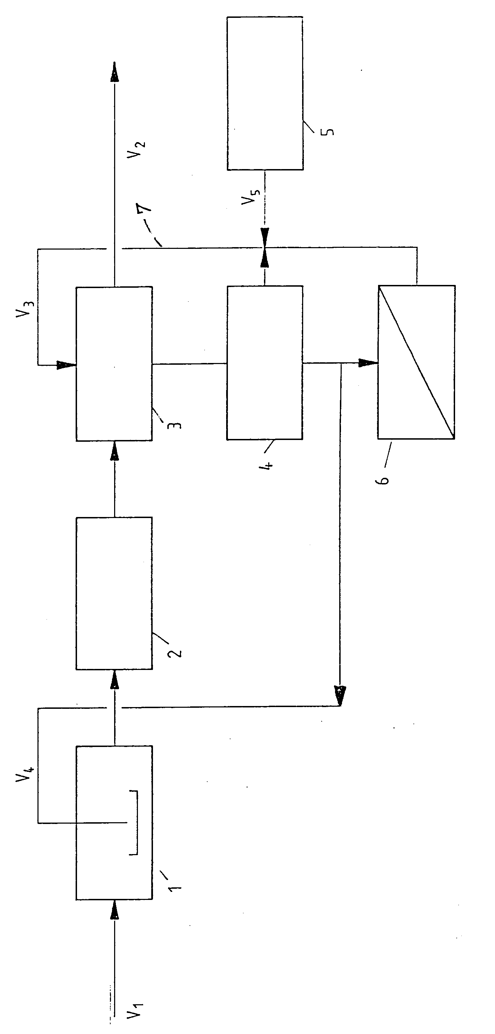

Ein Ausführungsbeispiel der Erfindung ist in der Zeichnung dargestellt und wird in der nachfolgenden Beschreibung näher erläutert. Die einzige Figur zeigt einen schematischen Aufbau einer für das erfindungsgemäße Verfahren geeigneten Vorrichtung.

Die in der Zeichnung dargestellte Vorrichtung weist einen Schlammtrockner 1 auf, dem das mit Schadstoffen beladene Rohgas V₁ zugeführt wird. Dem Schlammtrockner ist ein Vorwäscher und Befeuchter 2 nachgeschaltet, der einen Düsenstock, eine Umwälzpumpe und eine Wasservorlage aufweist. Der Vorwäscher kann als Gegenstromwäscher oder als Kreuzstromwäscher ausgebildet sein. Dem Vorwäscher ist ein ein- oder mehrstufiger Biofilter 3 nachgeschaltet, in dem sich eine oder mehrere Biofilterschüttungen befinden. Die Biofilterschüttung besteht aus einem porösen Material oder aus offenen Hohlkörpern, auf dem Mikroorganismen siedeln. Das Trägermaterial für die Mikroorganismen, das die Schüttung bildet, kann entweder aus einem organischen oder vorzugsweise aus einem anorganischen Material bestehen, wobei zum Beispiel Polyäthylen-Füllkörper verwendet werden. Der Biofilter ist mit einem Düsensystem versehen, das von einer nicht dargestellten Steuerung gesteuert Wasser sowie Nähr- und Giftstoffe gleichmäßig über die Schüttung verteilt zuführt. Dabei wird die Zufuhr der Wasser/Nähr- und Giftstoffströme V₃ beispielsweise abhängig von der Zeit gesteuert, wobei allerdings auch andere Steuerungsparameter verwendet werden können, die mit in dem Biofilter angeordneten Sensoren erfaßt werden.

Nach der Durchströmung des Biofilters 3 wird das gereinigte Gas V₂ vorzugsweise in die Atmosphäre abgeführt.

Dem Biofilter 3 nachgeschaltet ist ein Pufferbehälter 4, in dem das Wasser und der Überschuß an Nähr- und Giftstoffen gesammelt werden und zum Biofilter 3 zurückgeführt werden. Dazu ist der Pufferbehälter 4 mit einer Rückführleitung 7 versehen, die mit dem Düsensystem des Biofilters 3 verbunden ist. In die Rückführleitung 7 wird aus einer Vorlage 5 ein Nähr- und Giftstoffkonzentrat V₅ eindosiert, wobei die Misch- oder Dosiervorrichtungen, mit denen die Konzentration der Nähr- und Giftstoffzufuhr bestimmt wird, nicht näher dargestellt sind.

Der Pufferbehälter 4 kann gleichzeitig als Sammelbehälter für den aus dem Biofilter 3 ausgespülten Überschußschlamm V₄ ausgebildet sein, der mit Hilfe von Pumpen oder dergleichen in den Schlammtrockner 1 gepumpt wird. Die Zuführung von Giftstoffen hat die Folge, daß im Biofilter 3 nicht erwünschte oder im Überschuß vorhandene Mikroorganismen in einem weit höheren Maß absterben oder abgelöst werden als es bei einem Biofilter der Fall ist, dem nur Nährstoffe zugeleitet werden. Daher ist hier die Frage einer Entsorgung und gegebenenfalls wirtschaftlichen Verwertung der im Überschußschlamm aus dem Biofilter 3 herausgeführten Biomasse von besonderem Interesse. Die Biomasse wird aus diesem Grunde aufgeschlossen, und die durch diese Zersetzung gewonnenen Stoffe, z.B. Eiweiße, Mineralien und dergleichen, können dem Biofilter als Nährstoffe wieder zugeführt werden. Hierdurch findet auf einfache Weise eine Entsorgung statt, und darüber hinaus kann der Verbrauch von Nährstoffen erheblich reduziert werden.

Zur Wiedergewinnung der Nährstoffe ist daher eine Aufschlußeinrichtung 6 für Überschußschlamm vorgesehen, die beispielsweise mit einer Heizvorrichtung versehen ist, durch die der Überschußschlamm auf hohe Temperaturen gebracht wird. Die Aufschlußvorrichtung 6 ist mit der Rückführleitung 7 verbunden, durch die die in der Aufschlußeinrichtung 6 aufgeschlossenen Bakterien in den Kreislaufprozeß zurückkommen.

Die Verfahrensweise der in der Figur dargestellten Vorrichtung ist wie folgt.

Das mit Schadstoff beladene Rohgas V₁ wird durch den Schlammtrockner1 geleitet, in dem es seine Wärme abgibt und vorbefeuchtet wird. Das Gas wird anschließend dem Vorwäscher 2 zugeleitet. Im Normalfall braucht das zu reinigende Gas lediglich befeuchtet zu werden, d.h. es wird im Vorwäscher 2 bis zu 100 % mit Feuchtigkeit gesättigt. Wenn allerdings das Gas nicht partikelfrei ist, sondern Staub- und Fettaerosole enthält, so werden diese in dem Vorwäscher ausgewaschen. Darüber hinaus kann in dem Vorwäscher eine pH-Regelung vorgesehen sein, wenn die pH-Konzentration des eingeleiteten Rohgases starken Schwankungen unterliegt.

Nachdem das Rohgas in dem Vorwäscher 2 befeuchtet wurde, gelangt das Gas in den Biofilter 3. Hier durchströmt es entweder von unten nach oben oder von oben nach unten die Biofilterschüttung. Gleichzeitig wird über das Düsensystem der Biofilterschüttung zeitgesteuert Wasser mit Nähr- und Giftstoffen zugeführt. Dabei richtet sich die Zusammensetzung der Nährstoffe, die aus Nährsalzen, Vitaminen und Spurenelementen bestehen, sowie der Giftstoffe nach dem zu reinigenden Gas bzw. den darin enthaltenen Schadstoffen. Die Schadstoffe werden beim Durchströmen des Gases durch die Filterschüttung von den an dem porösen Trägermaterial angesiedelten Mikroorganismen aufgenommen. Der Lückengrad der Schüttung richtet sich nach dem Nähr- und Giftstoffangebot. Je höher die Nährstofffracht und je geringer die Giftstofffracht sind, desto höher ist der Lückengrad der ausgewählten Schüttung, wodurch erreicht wird, daß der Überschußschlamm durch Zufuhr von Wasser ausgetragen werden kann. Das Wasser mit den Nähr- und Giftstoffen durchrieselt die Schüttung und versorgt die Mikroorganismen. Der Überschuß an Wasser gelangt aus dem Biofilter 3 in den Pufferbehälter 4, von wo es mit den überschüssigen Nährstoffen zurück auf den Biofilter 3 geführt wird. Zusätzlich werden über die Vorlage 5 gezielt Nähr- und Giftstoffe sowie gegebenenfalls auch adaptierte und mutierte Bakterienstämme zugeführt. Auf diese Weise kann die Population der Mikroorganismen im Biofilter 3 so gesteuert werden, daß die aktive Bioflora geschützt wird und populationsbedrohende Parasiten oder Pilze sich nicht ungewollt vermehren können. Jedoch kann hierdurch auch erreicht werden, daß die aktive Bioflora sich nicht ungehemmt vermehrt. Darüber hinaus kann durch geeignete Einstellung des pH-Wertes der zugeführten wässerigen Lösung sowie des Feuchtigkeitsgehaltes, der Temperatur und des Sauerstoffgehaltes des Biofilters zusätzlich auf das Wachstum bzw. die Schwächung der einzelnen Mikroorganismen Einfluß genommen werden.

Der ausgespülte Überschußschlamm kann in dem Pufferbehälter 4 gesammelt und in den Schlammtrockner 1 gepumpt werden. Selbstverständlich kann auch ein nicht dargestellter zusätzlicher Behälter vorgesehen sein. Der Überschußschlamm wird in dem Schlammtrockner in entsprechende Trockenbeete bzw. in Filtersäcke eingeleitet. Der Prozeß arbeitet chargenweise; nachdem ein Filtersack gefüllt ist, erfolgt die Füllung des nächsten Filtersacks. Wenn der Schlamm abgetrocknet ist, wird er aus dem Schlammtrockner herausgenommen und als Düngemittel oder dergleichen weiterverwertet.

Andererseits kann der Überschußschlamm oder ein Teil von diesem in der Aufschlußeinrichtung 6 gesammelt und in dieser lysiert werden. Dabei wird der Überschußschlamm erhitzt, wodurch die Zellwände der in dem Schlamm enthaltenen Bakterien aufbrechen und die hierbei gewonnenen Nährstoffe wieder zurück in die flüssige Phase gebracht werden können, die dann über die Rückführleitung 7 wieder wieder dem Biofilter 3 zugeleitet werden.

In einer weiteren Ausbildung der Aufschlußeinrichtung 6 werden die Bakterien des Überschußschlamms dadurch lysiert, daß sie durch Zugabe von Chemikalien oxidiert werden.

## Patentansprüche

1. Verfahren zum Reinigen von Gasen, bei dem die Gase an einem mit unterschiedlichen Mikroorganismen besiedelten und mit einer wässrigen Lösung beregneten Trägermaterial (Biofilter) entlanggeführt werden, dadurch gekennzeichnet, daß dem Biofilter sowohl Nährstoffe als auch gezielt Giftstoffe für die Mikroorganismen zugeleitet werden.

2. Verfahren nach Anspruch 1, dadurch gekennzeichnet, daß überschüssige Nährstoffe und/oder Giftstoffe im Kreislauf in den Biofilter zurückgeführt werden.

3. Verfahren nach Anspruch 1 oder 2, dadurch gekennzeichnet, daß die Giftstoffe gezielt nur auf einen Teil der Mikroorganismen wirken.

4. Verfahren nach Anspruch 1 oder 2, dadurch gekennzeichnet, daß die Giftstoffe auf alle Mikroorganismen, jedoch mit unterschiedlicher Intensität wirken.

5. Verfahren nach einem der Ansprüche 1 bis 4, dadurch gekennzeichnet, daß als Giftstoffe Schwermetallsalze und/oder Kaliumsorbat und/oder Dicyandiamid verwendet werden.

6. Verfahren nach einem der Ansprüche 1 bis 5, dadurch gekennzeichnet, daß als Giftstoff Wasserstoffperoxid verwendet wird.

7. Verfahren nach einem der Ansprüche 1 bis 6, dadurch gekennzeichnet, daß die Menge und Beschaffenheit der zugeleiteten Nährstoffe und/oder Giftstoffe in Abhängigkeit von der Menge und der Beschaffenheit der in den Gasen enthaltenen Verunreinigungen gesteuert wird.

8. Verfahren nach einem der Ansprüche 1 bis 7, dadurch gekennzeichnet, daß der aus dem biologischen Abbauprozeß auftretende Überschußschlamm aus dem Trägermaterial ausgespült und getrocknet wird.

9. Verfahren nach Anspruch 8, dadurch gekennzeichnet, daß der Überschußschlamm durch das zu reinigende Gas getrocknet wird.

10. Verfahren nach Anspruch 8 oder 9, dadurch gekennzeichnet, daß der ausgespülte Überschußschlamm lysiert wird und die aufgeschlossenen Mikroorganismen als Nährstoffe wieder in den Biofilter zurückgeführt werden.

11. Verfahren nach Anspruch 10, dadurch gekennzeichnet, daß zum Lysieren der Überschußschlamm erhitzt wird.

12. Verfahren nach Anspruch 10, dadurch gekennzeichnet, daß zum Lysieren die Mikroorganismen durch Zugabe von Chemikalien oxidiert werden.

13. Verfahren nach einem der Ansprüche 1 bis 12, dadurch gekennzeichnet, daß der pH-Wert der wässerigen Lösung für eine gezielte Stärkung und/oder Schwächung einzelner Mikroorganismen eingestellt wird.

14. Verfahren nach einem der Ansprüche 1 bis 13, dadurch gekennzeichnet, daß der Feuchtigkeitsgehalt des Biofilters für eine gezielte Stärkung und/oder Schwächung einzelner Mikroorganismen eingestellt wird.

15. Verfahren nach einem der Ansprüche 1 bis 14, dadurch gekennzeichnet, daß die Temperatur des Biofilters für eine gezielte Stärkung und/oder Schwächung einzelner Mikroorganismen eingestellt wird.

16. Verfahren nach einem der Ansprüche 1 bis 15, dadurch gekennzeichnet, daß der Sauerstoffgehalt des Biofilters für eine gezielte Stärkung und/oder Schwächung einzelner Mikroorganismen eingestellt wird.

## Claims

1. Process for the purification of gases, in which the gases are passed through a carrier material (biofilter) populated by various micro-organisms and sprayed with an aqueous solution, characterised in that both nutrients and poisons are purposely fed to the biofilter for the micro-organisms.

2. Process according to Claim 1, characterised in that excess nutrients and/or poisons are recirculated into the biofilter.

3. Process according to Claim 1 or 2, characterised in that the poisons purposely act only on one portion of the micro-organisms.

4. Process according to Claim 1 or 2, characterised in that the poisons acts on all the micro-organisms, but to a different intensity.

5. Process according to one of Claims 1 to 4, characterised in that heavy metal salts and/or potassium sorbate and/or dicyandiamide are used as poisons.

6. Process according to one of Claims 1 to 5, characterised in that hydrogen peroxide is used a poison.

7. Process according to one of Claims 1 to 6, characterised in that the amount and composition of the nutrients and/or poisons supplied are controlled in dependence on the amount and composition of the impurities contained in the gases.

8. Process according to one of Claims 1 to 7, characterised in that the excess sludge formed from the process of biological decomposition is rinsed out of the carrier material and dried.

9. Process according to Claim 8, characterised in that the excess sludge is dried by the gas to be purified.

10. Process according to Claim 8 or 9, characterised in that the excess sludge rinsed out is lysed and the broken down micro-organisms are returned as nutrients into the biofilter.

11. Process according to Claim 10, characterised in that for lysis the excess sludge is heated.

12. Process according to Claim 10, characterised in that for lysis the micro-organisms are oxidised by adding chemicals.

13. Process according to one of Claims 1 to 12, characterised in that the pH value of the aqueous solution is adjusted for an intended strengthening and/or weakening of individual micro-organisms.

14. Process according to one of Claims 1 to 13, characterised in that the moisture content of the biofilter is adjusted for an intended strengthening and/or weakening of individual micro-organisms.

15. Process according to one of Claims 1 to 14, characterised in that the temperature of the biofilter is adjusted for an intended strengthening and/or weakening of individual micro-organisms.

16. Process according to one of Claims 1 to 15, characterised in that the oxygen content of the biofilter is adjusted for an intended strengthening and/or weakening of individual micro-organisms.

## Revendications

1. Procédé de purification de gaz, lors duquel l'on fait passer les gaz le long d'un matériau de support (biofiltre) peuplé de micro-organismes divers et soumis à ruissellement à l'aide d'une solution aqueuse, caractérisé en ce que l'on fait parvenir au biofiltre à volonté non seulement des substances nutritives mais aussi des substances toxiques pour les micro-organismes.

2. Procédé selon la revendication 1, caractérisé en ce que l'on reconduit des substances nutritives et/ou des substances toxiques en excès en circuit fermé dans le biofiltre.

3. Procédé selon la revendication 1 ou 2, caractérisé en ce que les substances toxiques n'ont à volonté une action que sur une partie des micro-organismes.

4. Procédé selon la revendication 1 ou 2, caractérisé en ce que les substances toxiques ont une action sur tous les micro-organismes, avec toutefois une intensité différente.

5. Procédé selon l'une quelconque des revendications 1 à 4, caractérisé en ce que l'on utilise, en tant que substances toxiques, des sels de métaux lourds et/ou du sorbate de potassium et/ou du dicyandiamide.

6. Procédé selon l'une quelconque des revendications 1 à 5, caractérisé en ce que l'on utilise en tant que substance toxique du peroxyde d'hydrogène.

7. Procédé selon l'une quelconque des revendications 1 à 6, caractérisé en ce que la quantité et la qualité intrinsèque des substances nutritives et/ou des substances toxiques introduites sont contrôlées en fonction de la quantité et la qualité intrinsèque des impuretés contenues dans les gaz.

8. Procédé selon l'une quelconque des revendications 1 à 7, caractérisé en ce que l'on élimine par rinçage et en ce que l'on procède au séchage de la boue en excès apparaissant au cours du processus biologique de dégradation en provenance du matériau de support.

9. Procédé selon la revendication 8, caractérisé en ce que l'on sèche la boue en excès à l'aide du gaz à purifier.

10. Procédé selon la revendication 8 ou 9, caractérisé en ce que l'on procède à la lyse de la boue en excès éliminée par rinçage et en ce que l'on reconduit à nouveau dans le biofiltre, en tant que substances nutritives, les micro-organismes dissous.

11. Procédé selon la revendication 10, caractérisé en ce qu'en vue de l'opération de lyse on procède au chauffage de la boue en excès.

12. Procédé selon la revendication 10, caractérisé en ce qu'en vue de l'opération de lyse, on procède à l'oxydation des micro-organismes par l'addition de produits chimiques.

13. Procédé selon l'une quelconque des revendications 1 à 12, caractérisé en ce que l'on règle la valeur pH de la solution aqueuse en vue d'un renforcement et/ou d'un affaiblissement à volonté de micro-organismes individuels.

14. Procédé selon l'une quelconque des revendications 1 à 13, caractérisé en ce que l'on règle l'humidité du biofiltre en vue d'un renforcement et/ou d'un affaiblissement à volonté de micro-organismes individuels.

15. Procédé selon l'une quelconque des revendications 1 à 14, caractérisé en ce que l'on règle la température du biofiltre en vue d'un renforcement et/ou d'un affaiblissement à volonté de micro-organismes individuels.

16. Procédé selon l'une quelconque des revendications 1 à 15, caractérisé en ce que l'on règle la teneur en oxygène du biofiltre en vue d'un renforcement et/ou d'un affaiblissement à volonté de micro-organismes individuels.
